(19) Europäisches Patentamt

European Patent Office

Office européen des brevets

(11) **EP 1 041 039 A1**

(12) **DEMANDE DE BREVET EUROPEEN**

(43) Date de publication:
**04.10.2000 Bulletin 2000/40**

(51) Int Cl.⁷: **C01G 15/00**, G01N 27/12,
G01N 33/00

(21) Numéro de dépôt: **00430012.5**

(22) Date de dépôt: **27.03.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **29.03.1999 FR 9903860**

(71) Demandeur: **IMRA EUROPE S.A.**
**F-06560 Valbonne (FR)**

(72) Inventeurs:
• **Ancey, Pascal**
**06740 Chateauneuf de Grasse (FR)**
• **Larramona, Gerardo**
**06560 Valbonne (FR)**
• **Ishihara, Kunio**
**06600 Antibes (FR)**

(74) Mandataire: **Domange, Maxime et al**
**Cabinet Beau de Lomenie,**
**232, avenue du Prado**
**13295 Marseille Cedex 08 (FR)**

(54) **Nouvelles compositions d'oxydes métalliques, des capteurs semi-conducteurs préparés à partir d'une telle composition et leurs utilisations pour la détection des gaz**

(57) L'invention concerne de nouvelles compositions d'oxydes métalliques.

Cette composition est caractérisée en ce qu'elle comprend un mélange soit de deux oxydes métalliques respectivement de l'oxyde d'indium et de l'oxyde de zinc, soit de trois oxydes métalliques respectivement de l'oxyde d'indium, de l'oxyde de zinc et de l'oxyde de gallium.

Ces compositions permettent de préparer des capteurs semiconducteurs utiles pour la détection des gaz, en particulier de monoxyde de carbone en atmosphère riche en hydrogène.

FIG.1

EP 1 041 039 A1

**Description**

L'invention concerne de nouvelles compositions d'oxydes métalliques, des capteurs semi-conducteurs préparés à partir d'une telle composition et leurs utilisations pour la détection des gaz.

INTRODUCTION

Les systèmes à base d'oxydes métalliques semi-conducteurs sont largement utilisés dans le domaine de la détection de gaz A.M. Azad et al., J. of the Electrochemical Society, 139 (1992) pp 3690-3704. Les premiers dispositifs ont été réalisés dans les années 1960 par T. Seiyama et al, Anal Chem, 34 (1962) p. 1502 et les premiers capteurs commerciaux ont été industrialisés par la société Figaro N. Taguchi, Japan Patent 45-38200 (Taguchi Gas Sensor) dans les années 1970.

Le principe de base consiste à mesurer, dans des conditions précises de température, la variation de la résistance électrique d'un matériau semi-conducteur plongé dans une atmosphère donnée. Quand le gaz à détecter est présent dans cette atmosphère, ses molécules s'adsorbent sur la surface des matériaux et modifient la résistance électrique. L'amplitude de la variation de résistance électrique est normalement fonction de la teneur ou concentration du gaz à détecter.

Les performances d'un capteur se déterminent alors à l'aide des caractéristiques suivantes

- La sélectivité, qui représente la capacité que possède le capteur à 'reconnaître' à une température donnée la présence d'un gaz par rapport à d'autres présents dans l'atmosphère où est plongé le capteur
- La sensibilité ou ampleur de la réponse, qui permet de déterminer le domaine de concentration en gaz dans lequel la réponse du capteur pourra être analysée pour remonter à la teneur en gaz
- Le temps de réponse, qui est la durée minimale pour atteindre un état stationnaire, après injection du gaz à détecter
- Le temps de récupération, qui caractérise la durée nécessaire au système pour revenir à l'état fondamental, après arrêt de l'injection
- La durée de vie, qui englobe tous les problèmes de stabilité, de reproductibilité, de vieillissement

La variation de résistance électrique est la conséquence des interactions entre le gaz et la surface du matériau semi-conducteur. Les mécanismes de ces phénomènes de surfaces sont nombreux et encore mal compris : adsorption physique, adsorption chimique, réaction de surface entre espèces adsorbées, réaction catalytique, réaction aux joints de grains ... etc. Ces phénomènes d'adsorption sont les facteurs qui limitent les performances (sélectivité, temps de réponse).

L'utilisation d'oxydes métalliques semi-conducteurs appropriés a permis de proposer des solutions attractives pour détecter un certain nombre de gaz dans des conditions de mesure maîtrisées. En outre, les capteurs à base de semi-conducteurs ont l'avantage d'être de taille réduite, de coût limité, ne nécessitent pas la connexion d'une électronique sophistiquée, et peuvent être utilisés pour des mesures en continu.

Cependant, la sélectivité réduite de tels capteurs impose aux industriels de proposer une solution pour chaque domaine d'application en fonction de la nature du gaz à détecter et de l'atmosphère porteuse. De plus, les problèmes de stabilité et de reproductibilité nécessitent aussi de développer des techniques de fabrication appropriées et/ou des systèmes de contrôle.

En particulier, la structure finale du capteur est composée des éléments suivants

- l'élément sensible réalisé à partir d'oxydes métalliques
- le substrat qui assure la rigidité mécanique du système pour les cas de structures en couches
- deux électrodes qui permettent de mesurer la résistance électrique
- un micro chauffage qui permet de maintenir le capteur à une température donnée (ce type de capteur fonctionne normalement à hautes températures, >100-200°C)
- d'autres éléments comme filtres, couches catalytiques, etc.

Les oxydes métalliques les plus couramment utilisés comme matière de base pour la réalisation de l'élément sensible du capteur sont les suivants : $SnO_2$, $In_2O_3$, ZnO, $TiO_2$, $BaTiO_3$, $Fe_2O_3$, CoO, $Cr_2O_3$, $WO_3$. En général, ils sont mélangés avec des additifs (poudres métalliques, liants, d'autres oxydes métalliques en petite quantité, etc.) ou d'autres composants (céramiques, d'autres oxydes métalliques pour des mélanges binaires, etc.) pour améliorer les performances.

En outre, la procédure de fabrication et la structure de l'élément sensible peuvent être très importantes pour obtenir la microstructure nécessaire permettant de contrôler la performance finale. Cependant, dans beaucoup de brevets sur les capteurs de gaz on propose des méthodes et des structures déjà décrites dans l'état de la technique antérieure. Ils peuvent être groupés en trois types :

- couches minces sur support (en utilisant plusieurs techniques de dépôt)
- couches épaisses sur support (en utilisant normalement la sérigraphie)
- pastilles céramiques frittées

**ÉTAT DE LA TECHNIQUE ANTÉRIEURE - BESOINS ACTUELS**

Pour répondre à des besoins de plus en plus croissants du marché, les présents inventeurs ont cherché à mettre au point un capteur à base d'oxydes métalliques semi-conducteurs capable de détecter le monoxyde de carbone (CO) présent en quantité limitée dans une atmosphère spéciale à forte concentration d'hydrogène ($H_2$), donc, de caractère réductrice.

Une des principales applications est le contrôle de la qualité de l'hydrogène produit à partir d'un système embarqué pour les véhicules à piles à combustible à membrane polymère (PEMFC). En effet, du fait des problèmes de stockage et de distribution de l'hydrogène, la meilleure solution consiste à utiliser un combustible liquide tel que du méthanol et de générer grâce à une réaction de reformage un mélange riche en hydrogène. Ce mélange ne contient pas d'oxygène mais il contient du CO qui a un effet catastrophique sur les performances de la pile PEMFC (voir RA Lemons, (1989), Fuel Cell for transportation, Proc. First Grove Fuel Cell Symp., Londres, p.251).

Aussi il est nécessaire d'ajouter entre le reformeur et la pile à combustible un dispositif qui permet de baisser la concentration de CO de 0,1-2% (sortie du reformeur) jusqu'à 10 ppm (entrée de la pile). Afin de contrôler l'efficacité de ce dispositif, un capteur de CO capable de fonctionner dans des mélanges riches en hydrogène doit être placé à la sortie du reformeur.

À présent, ils existe plusieurs type de capteurs de CO du type semi-conducteurs qui ne peuvent fonctionner que dans des atmosphères contenant de l'oxygène. Les principales applications sont les alarmes domestiques et la mesure de la pollution dans l'air.

Il existe beaucoup de capteurs sensibles au CO qui sont aussi sensibles au $H_2$, qui est un des gaz le plus facile à détecter par beaucoup de capteurs. Ainsi, il a été décrit dans des brevets japonais, brevets JP H 10-73553, 17 mars 1998, JP H 10-73554, 17 mars 1998, JP ll 10-73555, 17 mars 1998, des capteurs de monoxyde de carbone qui sont sélectifs vis-à-vis de l'hydrogène. Cependant, cette sélectivité est limitée à des teneurs en hydrogène de l'ordre de 1000 parties par million (1000 ppm = 0,1%) et pour des atmosphères à base d'air. Ils ne sont donc pas adaptés pour mesurer le CO dans des atmosphères à plus de 10% (en volume) de $H_2$ notamment à 50% en $H_2$ et sans présence d'oxygène. En outre, ils sont basés sur l'oxyde de cuivre(II), CuO, et, aux températures de travail des capteurs (250-350°C) on sait que cet oxyde est réduit en cuivre métal par des atmosphères d'hydrogène, ce qui empêche d'utiliser ce type de capteur pour l'application de la présente invention.

Des données ont été publiées sur le comportement de capteurs de type semi-conducteurs réalisés à partir d'un mélange de deux oxydes métalliques, (voir H. Yamaura et al., Sensors and Actuators, B35-36 (1996) pp. 325-332 ; H. Yamaura et al., J. Electrochemical Society, 144 (6) (1997) pp 158-160 ; H. Yamaura et al., J. Electrochemical Society, 143 (2) (1996) pp36-37) soumis au contact de mélanges gazeux composés d'oxygène et d'un seul gaz à caractère réducteur (CO, $H_2$) dont la teneur est typiquement inférieure à 1%. Cependant ces résultats ne permettent pas de prévoir le comportement d'un mélange de plusieurs oxydes et d'imaginer la réponse de matériaux existants en présence d'un mélange composé de CO et d'hydrogène.

En conséquence, il n'existe pas à l'heure actuelle des informations sur la disponibilité de capteurs semi-conducteurs capables de détecter du CO présent dans des atmosphères de $H_2$ réductrices. On peut raisonnablement penser que la sélectivité limitée de cette famille de capteurs n'en fait pas à priori de bons candidats pour la détection de CO dans une atmosphère à $H_2$ réductrice. Dans de telles conditions on s'attend à ce que la présence majoritaire du $H_2$ masque la présence en quantité plus faible du CO à détecter.

On a décrit dans la publication Proc. SPIE-int. soc. Opt. Eng. (1999), 3675, 150-158 l'utilisation d'un mélange de ZnO, $In_2O_3$ et d'oxyde mixte $Zn_2In_2O_5$ comme capteur de gaz $Cl_2$ ou $O_3$ dans l'air.

## PROBLÈMES À LA BASE ET SOLUTION PROPOSÉE

En plus des problèmes exposés ci-dessus (difficulté à trouver un capteur sélectif au CO par rapport à $H_2$, absence de l'oxygène dans l'atmosphère porteuse), on a trouvé des difficultés supplémentaires lors des premiers essais effectués au laboratoire. Les principales ont été :

    1) la grande sensibilité à l'hydrogène présent à très grande concentration dans l'atmosphère porteuse pour beaucoup de capteurs de composition chimique différente
    2) ou la modification irréversible de la matière sensible par réduction de l'oxyde en métal

Ainsi, la présente invention a pour but principal de résoudre le nouveau problème technique consistant en la fourniture d'un nouveau capteur semi-conducteur comprenant une composition chimique d'oxyde(s) métallique(s) et qui puisse être utilisé pour la détection de gaz, en particulier de monoxyde de carbone, en atmosphère riche en hydrogène, en ayant une faible sensibilité à l'hydrogène présent en très grande concentration dans une telle atmosphère porteuse.

La présente invention a encore pour but principal de résoudre le nouveau problème technique consistant en la fourniture d'une nouvelle composition d'oxyde(s) métallique(s) qui soit stable à la température, notamment à la température de fonctionnement du système en tant que capteur semi-conducteur et en particulier dans le cas de la détection de gaz, en particulier le monoxyde de carbone, en atmosphère riche en hydrogène.

La présente invention a encore pour but principal de résoudre le nouveau problème technique consistant en la fourniture d'un nouveau capteur utile pour la détection de gaz, en particulier de monoxyde de carbone, dans une atmosphère riche en hydrogène, et de nouvelles compositions d'oxyde(s) métallique(s), qui soient en outre capable de présenter une sélectivité et une sensibilité suffisantes pour permettre la mesure de la concentration d'un gaz, en particulier le monoxyde de carbone, en atmosphère riche en hydrogène.

La présente invention permet pour la première fois de résoudre simultanément les problèmes techniques énoncés ci-dessus d'une manière simple, sûre et fiable, utilisable à l'échelle industrielle.

Ainsi, selon un premier aspect, la présente invention a pour objet l'utilisation d'une composition d'oxydes métalliques comme capteur semi-conducteur pour la détection de gaz, en particulier le monoxyde de carbone, en atmosphère riche en hydrogène, ladite composition étant caractérisée en ce qu'elle comprend un mélange soit de deux oxydes métalliques respectivement de l'oxyde d'indium et de l'oxyde de zinc, soit de trois oxydes métalliques respectivement de l'oxyde d'indium, de l'oxyde de zinc et de l'oxyde de gallium.

Selon une caractéristique avantageuse, l'oxyde de zinc représente environ 10 à environ 110 g pour 100 g d'oxyde d'indium.

Selon encore une autre caractéristique avantageuse de l'invention, l'oxyde de gallium est présent dans une proportion jusqu'à environ 70 g pour 100 g d'oxyde d'indium, et de préférence entre environ 50 et environ 70 g d'oxyde de gallium pour 100 g d'oxyde d'indium.

Selon un mode de réalisation particulier, cette composition d'oxydes métalliques est réalisée à partir d'un mélange de deux oxydes métalliques constitués par l'oxyde de zinc et l'oxyde d'indium, l'oxyde de zinc représentant de préférence d'environ 10 à environ 110 g pour 100 g d'oxyde d'indium.

Selon un mode de réalisation avantageux de l'invention, la composition d'oxydes métalliques précitée comprend un mélange de trois oxydes métalliques comprenant d'environ 10 à environ 110 g d'oxyde de zinc et jusqu'à environ 70 g, de préférence entre environ 50 g et environ 70 g d'oxyde de gallium pour 100 g d'oxyde d'indium.

Selon une variante de réalisation particulière de l'invention, le mélange des deux ou trois oxydes métalliques précités est obtenu par mélange de chaque oxyde métallique dans la proportion en poids recherchée, avec éventuellement des opérations de broyage et de calcination à haute température, par exemple entre 700 et 1 000°C, afin d'obtenir un mélange plus intime des composés.

Selon un mode de réalisation particulièrement avantageux, la composition d'oxydes métalliques précitée se présente sous forme d'un mélange de poudres d'oxydes métalliques comprenant environ 67 g d'oxyde de gallium et environ 22 g d'oxyde de zinc pour 100 g d'oxyde d'indium.

Selon un autre mode de réalisation particulier de l'invention, la composition précitée se présente sous la forme d'un mélange de poudres d'oxydes métalliques comprenant environ 67 g d'oxyde de gallium et environ 110 g d'oxyde de zinc pour 100 g d'oxyde d'indium.

Selon encore un autre mode de réalisation particulier de l'invention, la composition précitée se présente sous forme d'un mélange de poudres d'oxydes métalliques comprenant environ 53 g d'oxyde de gallium, environ 13 g d'oxyde de zinc pour 100 g d'oxyde d'indium.

Selon encore un autre mode de réalisation de l'invention, la composition précitée se présente sous forme d'un mélange de poudres d'oxydes métalliques comprenant environ 43 g d'oxyde de zinc pour 100 g d'oxyde d'indium.

Selon un deuxième aspect, la présente invention fournit une nouvelle composition d'oxydes métalliques, caractérisée en ce qu'elle comprend un mélange de trois oxydes métalliques respectivement de l'oxyde d'indium, de l'oxyde de zinc et de l'oxyde de gallium, telle que définie précédemment.

Selon un troisième aspect, la présente invention couvre aussi un capteur semi-conducteur, caractérisé en ce qu'il est préparé à partir d'une composition qui comprend un mélange de trois oxydes métalliques telle que définie précédemment.

Selon un mode de réalisation avantageux les capteurs selon l'invention sont du type couche épaisse frittée à haute température, par exemple entre 600 et 1 000°C, éventuellement en formant une couche active sur un substrat inactif, tel qu'un substrat céramique, et avantageusement, ce capteur fait partie intégrante d'un système de mesure de résistance.

FABRICATION DES COMPOSITIONS D'OXYDES METALLIQUES

Pour la préparation de la composition d'oxydes métalliques, qui constituera ultérieurement la partie active de capteurs semi-conducteurs, on part d'un mélange de deux ou trois oxydes métalliques : l'oxyde d'indium (III) $In_2O_3$, l'oxyde de zinc (II) ZnO et lorsqu'il est présent l'oxyde de gallium (III) $Ga_2O_3$. Tous ces oxydes sont d'origine commerciale.

| $In_2O_3$ | $Ga_2O_3$ | ZnO |
|---|---|---|
| 1 gramme | 0 - 0,7 gramme | 0,1 - 1,1 grammes |
| 1 mole | 0 - 1 mole | 0,3 - 4 moles |

Des opérations optionnelles de broyage et de calcination à 700 -1 000°C peuvent être réalisées en plus afin d'obtenir une mélange plus intime des composants sous forme de poudre.

FABRICATION DES CAPTEURS

On prépare un capteur semi-conducteur à partir de la composition sous forme de poudre telle qu'obtenue ci-dessus.

Pour ce faire, on reprend le mélange sous forme de poudre des oxydes métalliques obtenus à la fin de l'opération de préparation des compositions, puis on ajoute de l'eau à la poudre jusqu'à formation d'une pâte. Cette pâte est déposée sur le substrat par exemple avec une spatule.

On peut de préférence préparer un capteur ayant une structure du type couche épaisse frittée. Dans ce cas, le capteur est composé par :

- un substrat céramique (du type MgO, $SiO_2$, $Al_2O_3$, etc), isolant du point de vue électrique, résistant aux hautes températures, et inactif envers les gaz présents dans l'atmosphère environnante
- deux électrodes métalliques à base d'un métal noble (Pt, Au, etc) utilisées pour mesurer la résistance électrique
- la matière active, à base d'un mélange d'oxydes métalliques déposé sous forme d'une couche de pâte formée par ajout d'eau comme indiqué ci-dessus, en partant du mélange de poudre d'oxydes métalliques précités, et dans laquelle pâte on introduit de préférence les électrodes métalliques pour constituer le capteur, comme cela est bien connu de l'homme de l'art ;
- un micro chauffage pouvant être incorporé dans l'application industrielle pour un contrôle précis de la température de travail du capteur, mais il n'est pas présent dans les tests dû au fait que ceux-ci sont réalisés dans une enceinte à température contrôlée.

La couche épaisse destinée à construire la partie active présente typiquement une dimension de 2 mm x 3 mm avec une épaisseur comprise entre environ 0,1 et environ 0,5 mm. Cependant, la taille n'est pas un aspect déterminant de la réponse du capteur.

Ensuite, le capteur ainsi constitué est de préférence soumis à deux étapes de cuisson : une étape de séchage à basse température (40 à 80°C) pendant au moins une heure, et une étape de frittage ou calcination à haute température (600 à 1000°C) pendant une fourchette de temps entre quelques minutes et quelques heures.

Il est à noter que le procédé général de fabrication des compositions d'oxydes métalliques et le procédé de fabrication des capteurs font aussi partie intégrante de la présente invention. En particulier, l'invention couvre aussi des compositions initiales des sels des métaux qui vont se décomposer et générer les oxydes ultérieurement notamment dans l'étape de frittage ou de calcination.

Ces sels de métaux qui sont capables de se décomposer et de générer des oxydes dans l'étape ultérieure de frittage ou de calcination sont bien connus de l'homme de l'art. Ces sels peuvent être par exemple des carbonates, des sels d'acides organiques tels qu'acétate, oxalate, etc., des nitrates, des sulfates, des chlorures, etc.

L'ajout de certains liants du type céramique comme la silice, la magnésie, l'alumine, etc., peuvent améliorer le frittage et la stabilité mécanique sans grande perte de la sensibilité du capteur.

Cependant, dans les exemples de fabrication ci-après et testés de tels liants n'ont pas été ajoutés.

D'autres buts, caractéristiques et avantages de l'invention apparaîtront clairement à la lumière de la description explicative qui suit faite en référence à divers exemples de réalisation de l'invention donnés simplement à titre d'illustration et qui ne sauraient donc en aucune façon limiter la portée de l'invention. Dans les exemples, tous les pourcentages sont donnés en poids, la température est en °C, la pression est la pression atmosphérique et l'atmosphère est l'air, sauf indication contraire.

Présentation des dessins

- La figure 1 annexée représente un schéma de principe d'un capteur du type couche épaisse frittée permettant dans le mode de réalisation préféré de l'invention de mesurer la concentration en CO dans une atmosphère riche en hydrogène par mesure de résistance.
- La figure 2 représente une courbe de réponse du capteur préparé à l'exemple 1-B pour la détection de CO en atmosphère riche en hydrogène, selon la procédure décrite à l'exemple 5, montrant la dépendance avec la température entre 100 et 150°C avec en abscisse le temps exprimé en minutes et en ordonnée la résistance exprimée en kiloohms.
- La figure 3 est une courbe similaire à celle de la figure 2, obtenue dans les conditions indiquées à l'exemple 5.
- La figure 4 est une courbe similaire à celle de la figure 2, obtenue dans les conditions énoncées à l'exemple 5, avec présence et en l'absence d'humidité, respectivement 2 % et 0 % de $H_2O$.
- La figure 5 représente une courbe de résistance du capteur en fonction de la concentration en CO pour différents temps d'injection à 150°C, avec la concentration en CO exprimée en pourcentage en abscisse en fonction de la résistance exprimée en kiloohms en ordonnée, la courbe avec les losanges étant obtenue avec les valeurs de résistance à 2 min, la courbe obtenue avec les carrés étant obtenue avec les valeurs de résistance à 30 min.
- La figure 6 représente une courbe de réponse du capteur de l'exemple 1-B en atmosphère d'hydrogène à différentes concentrations de CO, respectivement 1 % et 2 %, similaires à la figure 2, avec en abscisse le temps exprimé en minutes et en ordonnée la résistance exprimée en kiloohms.

- La figure 7 représente une courbe similaire à celle de la figure 6 pour différentes concentrations de CO, respectivement de 0,5 % et 1 %.
- La Figure 8 représente une courbe de réponse du capteur de l'exemple 2 en atmosphère d'hydrogène, avec présence et en l'absence d'humidité, respectivement 2 % et 0 % de $H_2O$.
- La figure 9 représente une courbe de réponse du capteur de l'exemple 3 en atmosphère d'hydrogène, avec cycles répétés d'injection et d'arrêt de CO à 2%.

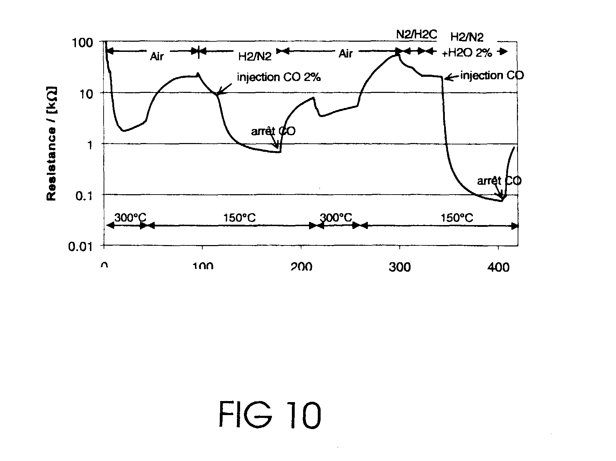

- La figure 10 représente une courbe de réponse du capteur de l'exemple 4 en atmosphère d'hydrogène, avec présence et en l'absence d'humidité, respectivement 2 % et 0 % de $H_2O$.

## EXEMPLE 1

### 1-A- Préparation de la composition d'oxydes métalliques

Un mélange des poudres d'oxydes métalliques a été préparé avec les proportions suivantes

| $In_2O_3$ | $Ga_2O_3$ | ZnO |
|---|---|---|
| 1 gramme | 0,67 grammes | 0,22 grammes |

Tous les oxydes sont d'origine commerciale et ils ont été broyés légèrement avant mélange.

### 1-B- Préparation d'un capteur à partir de la composition préparée sous 1-A

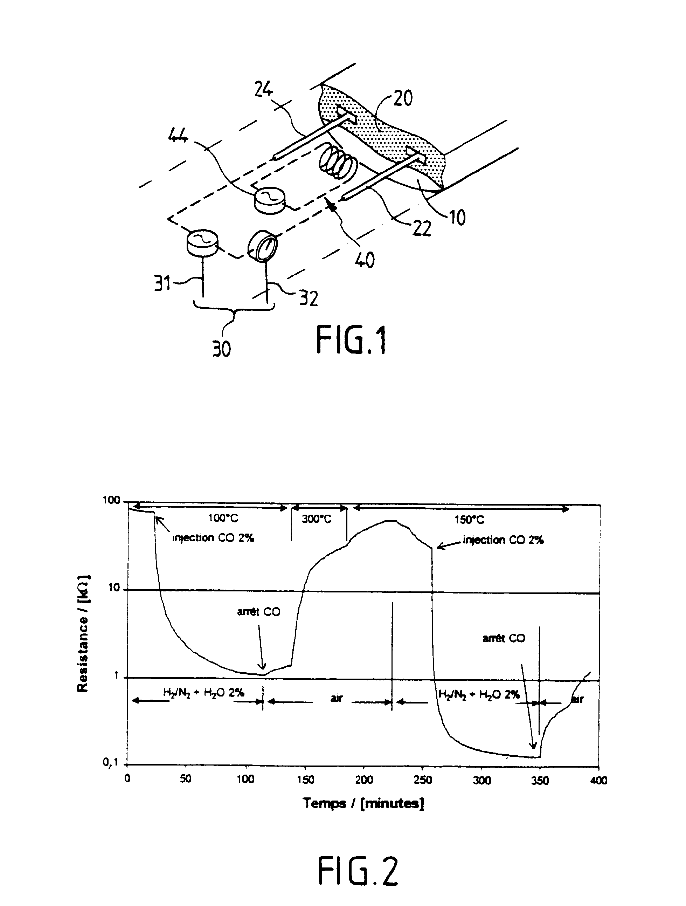

La procédure suivie pour la préparation des capteurs met en oeuvre la procédure générale précitée :
Préparation de la pâte moyennant l'ajout d'eau, dépôt à la spatule sur le substrat céramique avec deux électrodes en platine, et cuisson. Celle-ci a été réalisé en deux étapes : séchage à 65°C pendant quatre heures, plus frittage ou calcination à 900°C pendant une heure dans un four à moufle dans l'atmosphère ambiante, suivi de refroidissement naturel jusqu'à la température ambiante.
Cette procédure permet de préparer un capteur ayant la structure représentée à la figure 1.
On observe que ce capteur se compose d'un substrat céramique 10 par exemple du type MgO, $SiO_2$, $Al_2O_3$, etc, isolant du point de vue électrique, résistant aux hautes températures, et inactif envers les gaz présents dans l'atmosphère environnante, de préférence atmosphère riche en hydrogène. Sur ce substrat céramique 10 est coulée sous forme d'une couche d'épaisseur recherchée, typiquement de l'ordre de 2 mm x 3 mm avec une épaisseur d'environ 0,1 à 0,5 mm, de la pâte de mélange d'oxydes métalliques préparée comme indiquée ci-dessus, représentée par le numéro de référence général 20 et dans laquelle on peut introduire les extrémités de deux électrodes de métal noble tel que platine, or, référencées respectivement 22, 24, avant cuisson de la pâte pour réaliser une intégration des électrodes avec la matière active constituée par les oxydes métalliques.
De manière connue en soi, les électrodes en métal noble 22, 24 sont ensuite reliées à un circuit de mesure de résistance 30 qui peut délivrer par un dispositif correspondant 31 un signal d'entrée en courant continu ou alternatif, et un dispositif 32 de réception d'un signal de sortie obtenu à partir d'un courant électrique continu ou alternatif, comme cela est bien connu par l'homme de l'art. Par ailleurs, il peut également être prévu un dispositif de micro chauffage 40 pouvant par exemple comprendre une résistance électrique 42 alimentée par une source d'alimentation 44.
Le fonctionnement de ce dispositif apparaîtra également en référence à l'exemple 5 ci-après d'utilisation du capteur.

## EXEMPLE 2

### 2-A- Préparation de la composition d'oxydes métalliques

Un mélange des poudres d'oxydes métalliques a été préparé avec les proportions suivantes:

| $In_2O_3$ | $Ga_2O_3$ | ZnO |
|---|---|---|
| 1 gramme | 0,67 grammes | 1,1 grammes |

Tous les oxydes sont d'origine commerciale et ils ont été broyés légèrement avant mélange.

### 2-B- Préparation d'un capteur à partir de la composition obtenue à l'exemple 2-A ci-dessus

La procédure suivie pour la préparation des capteurs a été celle décrite ci-dessus : préparation de la pâte moyennant l'ajout d'eau, dépôt à la spatule sur le substrat céramique avec deux électrodes en platine, et cuisson. Celle-ci a été réalisée en deux étapes : séchage à 65°C pendant deux heures, plus frittage ou calcination à 900°C pendant une heure dans un four à moufle dans l'atmosphère ambiante, suivi de refroidissement naturel jusqu'à la température ambiante.
Les capteurs ont été soumis à quelques tests, qui ont montré une réponse similaire à ceux de l'Exemple 1.

## EXEMPLE 3

### 3-A- Préparation de la composition d'oxydes métalliques

Un mélange des poudres d'oxydes métalliques a été préparé avec les proportions suivantes

| $In_2O_3$ | $Ga_2O_3$ | ZnO |
|---|---|---|
| 1 gramme | 0,53 grammes | 0,13 grammes |

Tous les oxydes sont d'origine commerciale. Le mélange a été soumis à un pré-traitement de calcination à une température de 900°C pendant une heure dans en four à moufle à l'atmosphère ambiante.

### 3-B- Préparation d'un capteur à partir de la composition préparée à l'étape 3-A ci-dessus

Ensuite, la procédure suivi pour la préparation des capteurs a été celle décrite ci-dessus : préparation de la pâte moyennant l'ajout d'eau, dépôt à la spatule sur le substrat céramique avec deux électrodes en platine, et cuisson. Celle-ci a été réalisée en deux étapes, tout d'abord séchage à 65°C pendant deux heures, plus frittage ou calcination à 700°C pendant quinze minutes dans un four à moufle dans l'atmosphère ambiante, suivi de refroidissement naturel jusqu'à la température ambiante.
Les capteurs ont été soumis à quelques tests, qui ont montré une réponse similaire à ceux de l'Exemple 1.

## EXEMPLE 4

### 4-A- Préparation de la composition d'oxydes métalliques

Un mélange des deux poudres de deux oxydes métalliques a été préparé avec les proportions suivantes :

| $In_2O_3$ | ZnO |
|---|---|
| 1 gramme | 0,43 grammes |

et tous les oxydes sont d'origine commerciale.

### 4-B- Préparation d'un capteur à partir de la composition préparée à l'étape 4-A ci-dessus

La procédure suivie pour la préparation des capteurs a été celle décrite ci-dessus : préparation de la pâte moyennant l'ajout d'eau, dépôt à la spatule sur le substrat céramique avec deux électrodes en platine, et cuisson. Celle-ci a été réalisée en deux étapes : séchage à 65°C pendant 2 h, plus frittage ou calcination à 900°C pendant 1 h dans un four à moufle dans l'atmosphère ambiante, suivie d'un refroidissement naturel jusqu'à la température ambiante.
Les capteurs ont été soumis à quelques tests qui ont montré une réponse similaire à ceux de l'exemple 1.

## EXEMPLE 5

### Utilisation des capteurs préparé aux exemples 1-B, 2-B, 3-B, et 4-B pour la détection de gaz, en particulier de monoxyde de carbone en atmosphère riche en hydrogène, avantageusement pour mesurer la concentration de gaz, en particulier de monoxyde de carbone en atmosphère riche en hydrogène.

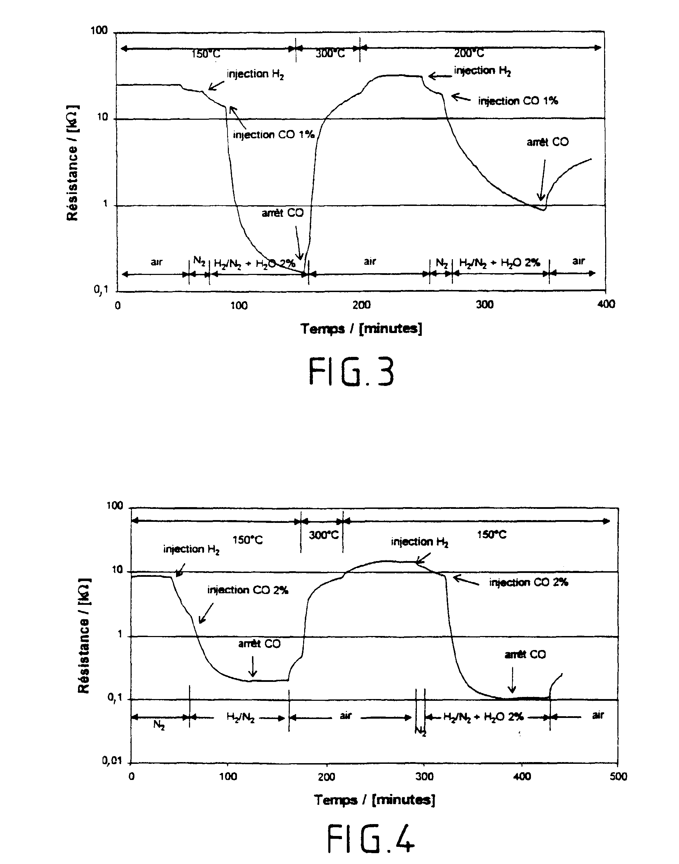

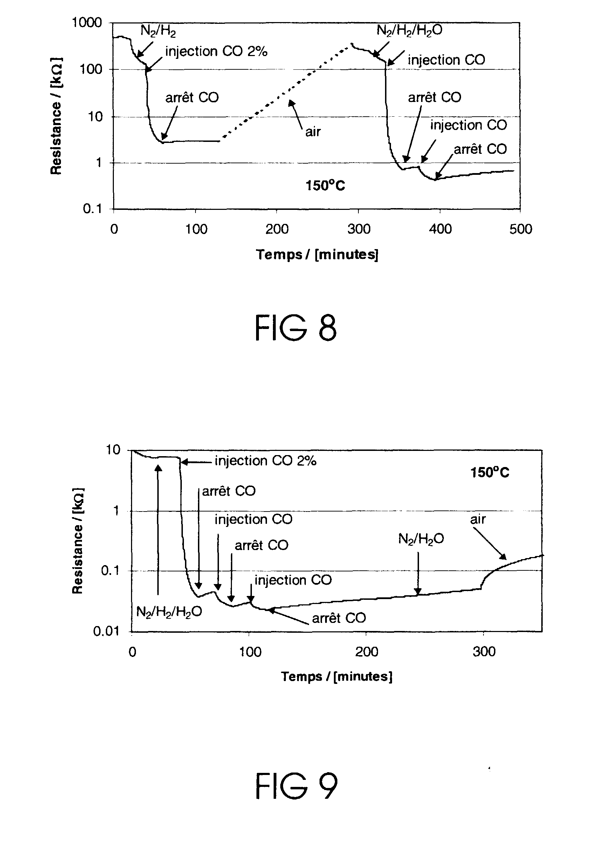

La performance des capteurs a été testée dans une atmosphère à débit constant (300 à 600 millilitres par minute), de composition contrôlée. Le gaz circule à l'intérieur d'un dispositif réalisé en verre et placé dans un four pour avoir un contrôle précis de la température des capteurs.
La résistance de chaque capteur est normalement mesurée par la méthode du courant alternatif, mais la méthode du courant continu peut être aussi utilisée. La mesure de cette résistance est faite d'une façon continue.
Une fois les capteurs placés dans le dispositif de test, ils sont soumis à un pré-traitement avec un débit d'air à une température de 300°C ou plus. Ce traitement a pour but de nettoyer et activer les capteurs et avoir une résistance initiale reproductible.
Ensuite la température est changée jusqu'à la valeur de la température de travail, qui se situe entre 100°C et 200°C, préférablement à 150°C.
Après, le gaz porteur est changé : l'air pur est substitué par une atmosphère à base d'azote, $N_2$, et d'hydrogène, $H_2$, à une très grande concentration, de plus de 30% en volume (le reste étant en $N_2$). Typiquement l'atmosphère des tests est de 50% $H_2$ plus 50% N2 (figures 2 et 3).
L'influence de l'humidité est testée en humidifiant le gaz porteur jusqu'à une teneur de 2% (en volume, à 25°C) en vapeur d'eau (figure 4, 8 9 et 10). La majorité des tests ont été réalisés avec l'atmosphère porteuse de $H_2/N_2$ (50/50) avec 2% en vapeur d'eau.
La capacité de détection du gaz monoxyde de carbone, CO, est testée par injection pendant un temps déterminé d'un débit de ce gaz dans le gaz porteur mentionné. La proportion des débits des gaz porteur et du CO permet le calcul de la concentration du gaz à tester.
La sensibilité pour la détection du CO, Sco, peut être exprimée de différentes manières. Normalement elle est exprimée comme un quotient entre la résistance dans le gaz porteur en absence de CO, Ro, et la résistance en présence du CO, Rco, après un temps donné suite à l'injection et à une température de travail précise. Nous avons calculé la sensibilité après 30 minutes d'injection où on considère que l'on a atteint le

régime stationnaire

$$Sco = Ro / Rco$$

La résistance du gaz porteur est considérée comme un point de référence ou de normalisation, utilisée pour comparer la sensibilité entre différents capteurs. Chaque capteur peut avoir une résistance Ro différente en raison de sa taille résultat de sa fabrication (épaisseur et surface de la partie active, séparation des électrodes, ... ), la sensibilité étant similaire.

La résistance du gaz porteur peut être choisie comme celle dans l'air, celle dans l'azote (humide ou sec), ou celle dans l'atmosphère $H_2/N_2$ (humide ou sèche). Dans les données montrées ici on a pris l'atmosphère en azote humide (2% en vapeur d'eau) comme résistance de référence.

À part la température de travail, la sensibilité au CO dépend de la concentration de ce gaz dans l'atmosphère porteuse.

D'autres gaz ont été aussi testés dans le même gaz porteur, notamment le dioxyde de carbone ($CO_2$) et le méthanol ($CH_3OH$).

Les capteurs préparés à l'Exemple 1 ont été testés par tests d'une durée moyenne de huit heures, réalisés presque tous les jours pendant trois mois. Pendant la durée de chaque test, ils ont été soumis à une exposition à l'hydrogène (à 50%) de six heures en moyenne. Egalement, pendant la durée de chaque test, ils sont été soumis à une exposition au CO (à 0,1%-2%) de deux heures en moyenne.

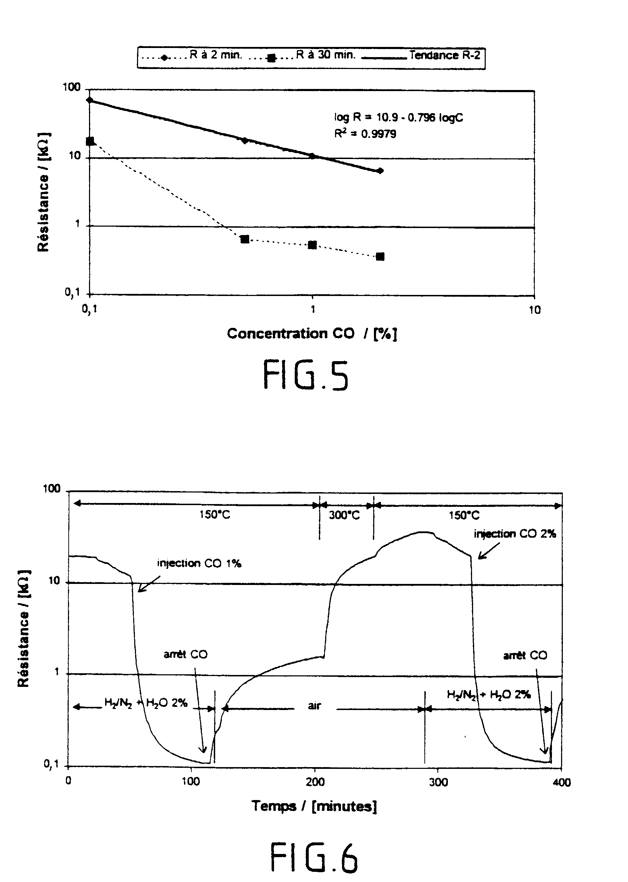

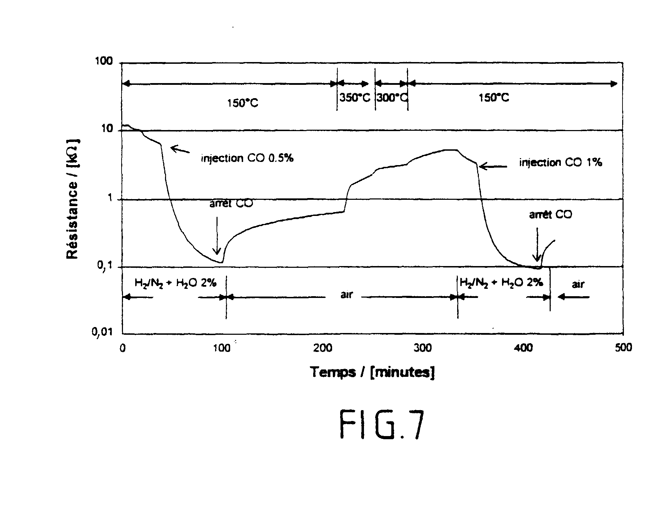

Les résultats obtenus avec ces capteurs on montré la possibilité de détecter du CO dans une plage de concentration entre 0,1 % (= 1000 ppm) et 2% (= 20000 ppm) dans des atmosphères $H_2/N_2$ à forte contenu en $H_2$ (>30%, typiquement 50%). Voir figures 5, 6 et 7.

La sensibilité pour le CO à 2% est de l'ordre de Sco=Ro/Rco~200-400 à cette concentration là, à une température de travail aux alentours de 150°C, et par rapport à une référence Ro d'atmosphère en azote humide. Ces valeurs-là sont des valeurs très élevées, par rapport à d'autres obtenues pour les capteurs Brevets JP H 10-73553, 17 mars 1998 ; JP H 10-73554, 17 mars 1998 ; JP H 10-73555, 17 mars 1998 utilisés pour détecter des gaz dans des atmosphères basées sur l'air. Comme conséquence de cela, pour ce type de capteur il est préférable de représenter les résultats en échelle logarithmique de résistances.

Le rapport entre la résistance de référence mesurée dans une atmosphère de $N_2$ (sec ou humide) et celle dans une atmosphère de $H_2/N_2$ (sec ou humide) est de l'ordre de 2, ce qui réduit de moitié la sensibilité envers le CO si on change la résistance de référence du $N_2$ vers $H_2/N_2$. Cependant, la sensibilité envers le CO avec cette résistance de référence continue à être très grande.

La limite basse de détection peut atteindre une concentration de 0,1 % CO, à la même température de travail. À cette concentration la sensibilité est encore appréciable, de l'ordre de $S_{CO}=Ro/R_{CO}$~10-20. Un comportement typique de variation de la résistance par rapport à la concentration du CO est montrée dans la figure 4.

Les capteurs préparés à l'Exemple 1-B montrent une résistance très stable au CO à 2% pendant tous les tests effectués pendant trois mois.

L'influence de l'humidité a été testée par comparaison entre atmosphères sèches et atmosphères humides à 2% en vapeur d'eau. En présence de vapeur d'eau, la sensibilité envers le CO s'améliore, tandis que la différence entre les références de $N_2$ et de $H_2/N_2$ diminuent. Cette propriété est intéressante dans les applications de génération de $H_2$ par reformage, pour laquelle la teneur en vapeur d'eau peut monter jusqu'à des concentrations plus grandes que 10%.

Concernant la présence d'autres gaz, ces capteurs n'ont montré aucune réponse avec l'injection de dioxyde de carbone, $CO_2$, à 5-10%, ni avec l'injection de méthanol.

Le temps de réponse des capteurs, c'est à dire, le temps mesuré jusqu'au moment où la résistance atteint une valeur constante, est de l'ordre de 30 minutes à 99,9% de la valeur à l'état stationnaire final, ou de 5 minutes à 98%, pour une concentration de 2% CO à la température de travail de 150°C. Cependant, la sensibilité au CO atteinte par ces capteurs après 2 minutes d'injection de CO à 2% est de l'ordre de Sco~10-20. Ceci permet d'utiliser ces capteurs dans des conditions dynamiques sans nécessité d'attendre l'état de résistance stationnaire.

Après une injection du CO, ces capteurs ne récupèrent pas bien leur résistance d'origine dans l'atmosphère porteuse. Cependant, cette récupération est possible et facile avec un débit d'air, c'est à dire en présence d'oxygène, à une température de 300°C ou plus. Des tests de récupération de ce type ont été réalisés au début et à la fin de chaque test, et ont montré un comportement reproductible.

L'invention couvre tous les moyens constituant des équivalents techniques des moyens décrits et représentés à la figure 1.

En outre, l'invention couvre toute caractéristique qui apparaît être nouvelle par rapport à un état de la technique quelconque à partir de la description prise dans son ensemble, incluant les exemples qui font partie intégrante de la présente invention.

### Revendications

**1.** Utilisation d'une composition d'oxydes métalliques comme capteur semi-conducteur pour la détection de gaz, en particulier de monoxyde de carbone, en atmosphère riche en hydrogène, comprenant un mélange soit de deux oxydes métalliques respectivement de l'oxyde d'indium et de l'oxyde de zinc, soit de trois oxydes métalliques respectivement de l'oxyde d'indium, de l'oxyde de zinc et de l'oxyde de gallium.

2. Utilisation selon la revendication 1, caractérisée en ce que l'oxyde de zinc représente d'environ 10 à environ 110 g pour 100 g d'oxyde d'indium.

3. Utilisation selon la revendication 1 ou 2, caractérisée en ce que les oxydes métalliques précités sont mélangés dans une proportion jusqu'à environ 70 g, de préférence entre environ 50 et 70 g, d'oxyde de gallium pour 100 g d'oxyde d'indium.

4. Utilisation selon l'une des revendications 1 à 3, caractérisée en ce que le mélange des deux ou trois oxydes métalliques est obtenu par mélange de chaque oxyde métallique dans la proportion en poids recherchée, avec éventuellement des opérations de broyage et de calcination à haute température, par exemple entre 700 et 1 000°C, afin d'obtenir un mélange plus intime des composants.

5. Utilisation selon l'une des revendications 1 à 4, caractérisée en ce qu'elle se présente sous forme d'une poudre d'oxydes métalliques comprenant environ 67 g d'oxyde de gallium et 22 g environ d'oxyde de zinc pour 100 g d'oxyde d'indium.

6. Utilisation selon l'une des revendications 1 à 4, caractérisée en ce qu'elle se présente sous forme d'un mélange de poudres d'oxydes métalliques comprenant environ 67 g d'oxyde de gallium et environ 110 g d'oxyde de zinc pour 100 g d'oxyde d'indium.

7. Utilisation selon l'une des revendications 1 à 4, caractérisée en ce qu'elle se présente sous forme d'un mélange de poudres d'oxydes métalliques comprenant environ 53 g d'oxyde de gallium, environ 13 g d'oxyde de zinc pour 100 g d'oxyde d'indium.

8. Utilisation selon l'une des revendications 1 à 4, caractérisée en ce qu'elle se présente sous forme d'un mélange de poudres de deux oxydes métalliques comprenant environ 43 g d'oxyde de zinc pour 100 g d'oxyde d'indium.

9. Utilisation selon l'une des revendications précédentes, caractérisée en ce que les oxydes métalliques sont préparées à partir de sels de métaux capables de se décomposer et de générer des oxydes ultérieurement et notamment dans le cadre d'une étape de frittage ou de calcination ultérieures, tels que des carbonates, des sels d'acides organiques, par exemple acétate, oxalate, des nitrates, des sulfates, des chlorures, éventuellement en présence d'un liant de type céramique tel que silice, magnésie, alumine.

10. Utilisation selon l'une des revendication 1 à 9, caractérisé en ce que le capteur est du type couche épaisse frittée à haute température, par exemple entre 600 et 1 000°C, éventuellement formant une couche active sur un substrat inactif, tel que substrat céramique, et avantageusement, ce capteur fait partie intégrante d'un système de mesure de résistance.

11. Utilisation d'un capteur selon l'une des revendications 1 à 10, pour mesurer la concentration de gaz, en particulier de monoxyde de carbone, en atmosphère riche en hydrogène.

12. Composition d'oxydes métalliques, caractérisée en ce qu'elle comprend un mélange de trois oxydes métalliques respectivement de l'oxyde d'indium, de l'oxyde de zinc et de l'oxyde de gallium.

13. Composition selon la revendication 12, caractérisée en ce que l'oxyde de zinc représente d'environ 10 à environ 110 g pour 100 g d'oxyde d'indium.

14. Composition selon la revendication 12 ou 13, caractérisée en ce que les oxydes métalliques précités sont mélangés dans une proportion jusqu'à environ 70 g, de préférence entre environ 50 et 70 g, d'oxyde de gallium pour 100 g d'oxyde d'indium.

15. Composition selon l'une des revendications 12 à 14, caractérisée en ce que le mélange des trois oxydes métalliques est obtenu par mélange de chaque oxyde métallique dans la proportion en poids recherchée, avec éventuellement des opérations de broyage et de calcination à haute température, par exemple entre 700 et 1 000°C, afin d'obtenir un mélange plus intime des composants.

16. Composition selon l'une des revendications 12 à 15, caractérisée en ce qu'elle se présente sous forme d'une poudre d'oxydes métalliques comprenant environ 67 g d'oxyde de gallium et 22 g environ d'oxyde de zinc pour 100 g d'oxyde d'indium.

17. Composition selon l'une des revendications 12 à 16, caractérisée en ce qu'elle se présente sous forme d'un mélange de poudres d'oxydes métalliques comprenant environ 67 g d'oxyde de gallium et environ 110 g d'oxyde de zinc pour 100 g d'oxyde d'indium.

18. Composition selon l'une des revendications 12 à 17, caractérisée en ce qu'elle se présente sous forme d'un mélange de poudres d'oxydes métalliques comprenant environ 53 g d'oxyde de gallium, environ 13 g d'oxyde de zinc pour 100 g d'oxyde d'indium.

**19.** Composition selon l'une des revendications 12 à 18, caractérisée en ce que les oxydes métalliques sont préparées à partir de sels de métaux capables de se décomposer et de générer des oxydes ultérieurement et notamment dans le cadre d'une étape de frittage ou de calcination ultérieures, tels que des carbonates, des sels d'acides organiques, par exemple acétate, oxalate, des nitrates, des sulfates, des chlorures, éventuellement en présence d'un liant de type céramique tel que silice, magnésie, alumine.

**20.** Capteur semi-conducteur, caractérisé en ce qu'il est préparé à partir d'une composition telle que définie à l'une quelconque des revendications 12 à 19.

**21.** Capteur selon la revendication 20, caractérisé en ce qu'il est du type couche épaisse frittée à haute température, par exemple entre 600 et 1 000°C, éventuellement formant une couche active sur un substrat inactif, tel que substrat céramique, et avantageusement, ce capteur fait partie intégrante d'un système de mesure de résistance.

FIG.1

FIG.2

FIG.3

FIG.4

FIG.5

FIG.6

FIG.7

FIG 8

FIG 9

FIG 10

Office européen
des brevets

**RAPPORT DE RECHERCHE EUROPEENNE**

Numéro de la demande

EP 00 43 0012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 601 914 A (BARNES JAMES O ET AL) 22 juillet 1986 (1986-07-22) * le document en entier * | 1-8,10 | C01G15/00 G01N27/12 G01N33/00 |
| X | EP 0 686 982 A (HOYA CORP) 13 décembre 1995 (1995-12-13) * le document en entier * | 12-19 | |
| X | KIMIZUKA N ET AL: "Homologous compounds, InFeO3(ZnO)m (m=1-9)" JOURNAL OF SOLID STATE CHEMISTRY,US,ORLANDO, FL, vol. 74, no. 1, pages 98-109, XP002112270 ISSN: 0022-4596 * le document en entier * | 12,15 | |
| A | CHEMICAL ABSTRACTS, vol. 97, no. 10, 6 septembre 1982 (1982-09-06) Columbus, Ohio, US; abstract no. 83998, FILATKINA: XP002126545 * abrégé * & ZH. NEORG. KHIM., vol. 27, no. 7, 1982, pages 1664-1666, | 1,4 | DOMAINES TECHNIQUES RECHERCHES (Int.Cl.7) C01G G01N |
| A | CHEMICAL ABSTRACTS, vol. 131, no. 17, 25 octobre 1999 (1999-10-25) Columbus, Ohio, US; abstract no. 237162, MIYATA: XP002126546 * abrégé * & PROC.SPIE-INT. SOC.OPT.ENG., 1999, pages 150-158, | 1,10 | |

Le présent rapport a été établi pour toutes les revendications

| Lieu de la recherche | Date d'achèvement de la recherche | Examinateur |
|---|---|---|
| LA HAYE | 12 juillet 2000 | LIBBERECHT, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**     EP 00 43 0012

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

12-07-2000

| Document brevet cité au rapport de recherche | Date de publication | Membre(s) de la famille de brevet(s) | Date de publication |
|---|---|---|---|
| US 4601914 A | 22-07-1986 | US 4453151 A | 05-06-1984 |
| EP 0686982 A | 13-12-1995 | JP 8245220 A | 24-09-1996 |
| | | US 5622653 A | 22-04-1997 |
| | | US 5681671 A | 28-10-1997 |
| | | US 5955178 A | 21-09-1999 |
| | | US 5843341 A | 01-12-1998 |

EPO FORM P0460

Pour tout renseignement concernant cette annexe : voir Journal Officiel de l'Office européen des brevets, No.12/82